# EUROPÄISCHE PATENTSCHRIFT

(11) **EP 0 754 438 B1**
(45) Veröffentlichungstag und Bekanntmachung des Hinweises auf die Patenterteilung: **05.12.2001**
(21) Anmeldenummer: 96810393.7
(22) Anmeldetag: 13.06.1996
(51) Int. Cl.: A61C 5/12, A61C 19/00

(54) **Interdental-Keil**
Interdental wedge
Coin interdentaire

(30) Priorität: 28.06.1995 CH 189295
(43) Veröffentlichungstag der Anmeldung: 22.01.1997
(73) Patentinhaber: Hawe-Neos Dental Dr. H. von Weissenfluh AG, 6934 Bioggio (CH)
(72) Erfinder: Baffelli, Gianni, 6950 Tesserete (CH); Von Weissenfluh, Beat A., 6925 Gentilino (CH); Kilcher, Beat, 6935 Bosco Luganese (CH)
(74) Vertreter: AMMANN PATENTANWAELTE AG BERN

(56) Entgegenhaltungen:
- EP-A- 0 169 803
- EP-A- 0 668 060
- DE-U- 8 912 620
- US-A- 2 867 905

## Beschreibung

Die vorliegende Erfindung bezieht sich auf einen Interdental-Keil, insbesondere zur Verwendung beim Einsetzen approximaler Füllungen aus lichthärtenden Materialien. Ein solcher Keil ist aus der EP-B-0 169 803 der gleichen Anmelderin bekannt, wobei dieser Keil aus Kunststoff geschaffen ist und lichtleitende Elemente enthält, um zum Aushärten der Füllungen aus Kunststoff benötigtes Licht an Ort und Stelle zu führen und um die Kunststoffmatrize, d. h. ein Band aus Kunststoff, derart an den Zahn anzupressen, dass die Matrize den Konturen des Zahnes folgen kann. Dieser ganz aus Kunststoff bestehende Keil vermag das Licht zwar an die richtige Stelle zu leiten, doch ist der Kunststoff nicht imstande, die Matrize formgerecht an den zu behandelnden Zahn zu pressen und ausserdem hat dieser Keil die Tendenz, aus den Zahnzwischenräumen herauszuschlupfen und ist nur bedingt imstande, die Zähne genügend zu separieren.

Um ein besseres Anschmiegen der Matrize zu gewährleisten und ein Herausschlüpfen des Keiles zu verhindern, wurde gemäss EP-A-0 594 535 der gleichen Anmelderin dem Keil ein Teil aus sogenanntem "Memory Resin" d. h. aus einem Harz mit Gedächtnis, beigefügt, das den Konturen des Zahnes besser folgen kann. Während diese Ausführungsform zumindest theoretisch in der Lage sein sollte, sowohl die gute Lichtleitung als auch die gute Haftung des Keiles zu erzielen, scheitert die Anwendung in der Praxis an der ungenügenden Separationskraft des Memory Harzes.

Es sind noch andere Kunststoffkeile bekannt, bei denen versucht wurde, eine gute Haftung zwischen den Zähnen zu erzielen, so beispielsweise mit einem inneren Kern aus härterem Material, der nach dem Einführen des Keiles hineingestossen wird, doch kann damit die Haftung auch nicht entscheidend erhöht werden.

Aus der US-A-2 867 905 ist ein Keil bekannt, der einen Kern aus einem bei Feuchtigkeit leicht anschwellendem Material wie Zitronenholz aufweist, der über eine gewisse Länge von einem thermoplastischen Material ummantelt ist, das vorzugsweise erwärmt und dadurch plastisch verformt wird. Ausserdem dient der Kunststoffbezug der Vereinigung mit einem zweiten Keil.

Vor der Verwendung von Kunststoffkeilen wurden bereits Holzkeile verwendet, die den Vorteil aufweisen, zwischen den Zähnen gut zu haften und in der Lage sind, genügend grosse Separationskräfte zu erzielen. Ein solcher Keil ist aus der nicht vorveröffentlichten EP-A-668 060 bekannt, wobei ein relativ harter Kern von einer äusseren, weicheren Komponenten ummantelt ist. Solche Holzkeile eignen sich für Amalgamfüllungen, da für solche Füllungen kein Licht benötigt wird. Andererseits können solche Holzkeile nicht für Kunststoffüllungen verwendet werden, die zum Aushärten Licht benötigen, da Holz kein Licht leitet.

Es ist von diesem Stand der Technik ausgehend Aufgabe der vorliegenden Erfindung, einen Interdental-Keil anzugeben, der sowohl gut zwischen den Zähnen haftet und den Konturen des zu behandelnden Zahnes folgen kann als auch das zum Aushärten des Füllungsmaterials benötigte Licht an die richtige Stelle zu leiten vermag und in der Lage sind, genügend grosse Separationskräfte zu erzielen. Ein solcher Interdental-Keil ist in Anspruch 1 definiert. Weitere Merkmale und Vorteile sind in den abhängigen Ansprüchen angegeben.

Die Erfindung wird im folgenden anhand einer Zeichnung eines Ausführungsbeispiels näher erläutert.

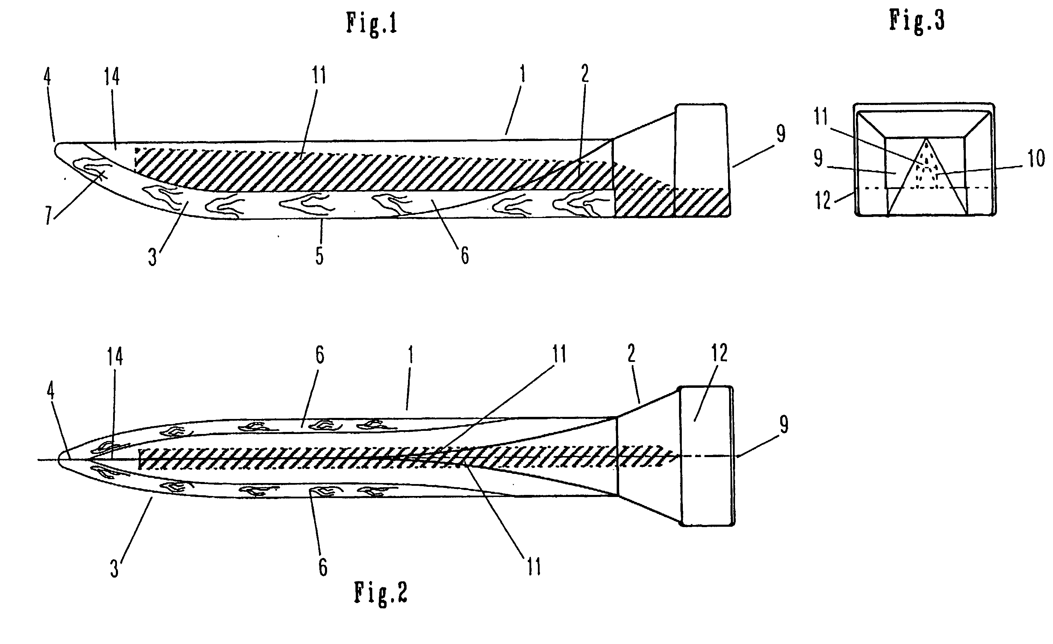

- Figur 1: zeigt den erfindungsgemässen Interdental-Keil in Seitenansicht,
- Figur 2: zeigt den Keil von Figur 1 in einer Sicht von oben,
- Figur 3: zeigt den Keil von Figur 2 in einer Sicht auf die Keilspitze,
- Figuren 4 und 5: zeigen die Holzsohle des Keiles gemäss den Figuren 1 und 2 in einer Seitenansicht und in einer Sicht von oben,
- Figur 6: zeigt den Kunststoffeinsatz des Keiles gemäss Figur 1 in einer Sicht von unten,
- Figur 7: zeigt den Kunststoffeinsatz vom Keil gemäss Figur 1 in einer Seitenansicht, und
- Figur 8: zeigt einen Schnitt gemass der Linie VIII-VIII in Figur 6.
- Figur 9: zeigt eine Auftragung der Deformation (Abszisse 21) gegen die ausgeübte Kraft (Ordinate 22) verschiedener Materialien

Bezüglich der Wirkungsweise und den Anwendungen eines Interdental-Keiles mit lichtleitenden Eigenschaften wird ausdrücklich auf die bereits weiter oben zitierten Dokumente EP-B-0 169 803 und EP-A-0 594 535 verwiesen.

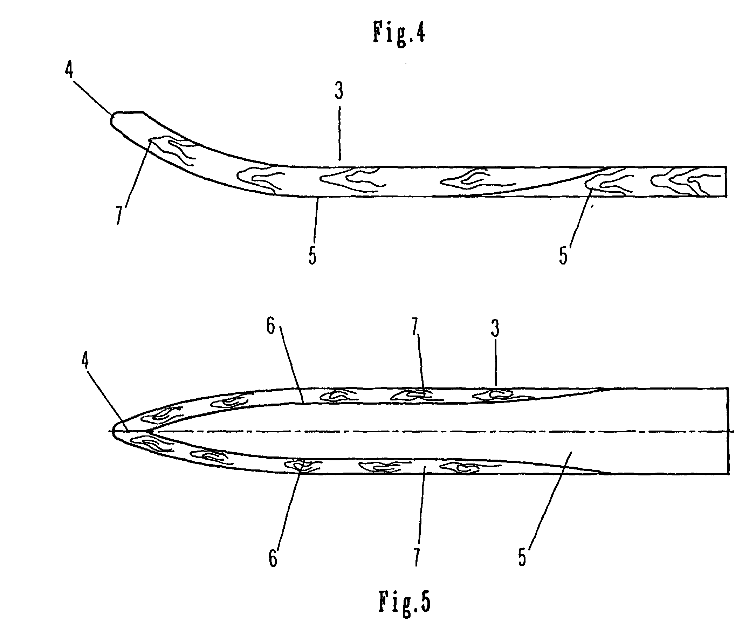

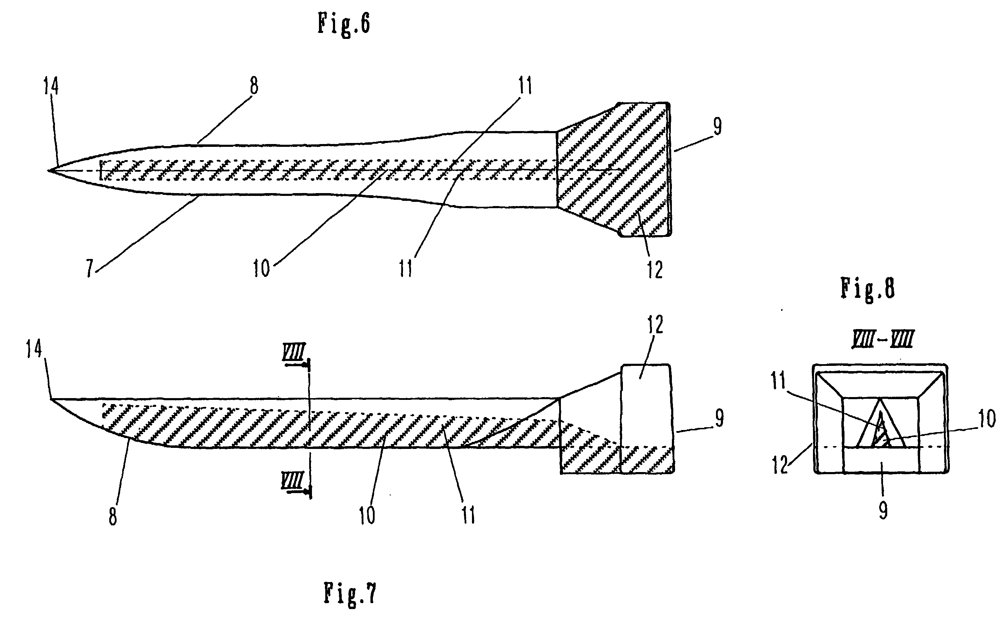

Keil 1 besteht im wesentlichen aus einem lichtleitenden Kunststoffeinsatz 2 und einer Sohle 3 aus Holz. Die Sohle 3 aus einem geeigneten, seit langem üblichen Holz mit den gut erforschten und bekannten Eigenschaften ermöglicht nicht nur ein gutes Anschmiegen der Kunststoffmatrize an die Umrisse des zu behandelnden Zahnes mit der aufzubringenden Füllung, sondern gewährleistet auch ein gutes Haften des Keils zwischen den Zähnen, so dass dieser auch bei Manipulationen, d. h. Auffüllen des Loches im Zahn durch den Zahnarzt, nicht gelockert wird und in der Lage ist, genügend grosse Separationskräfte zu erzielen. Die Holzsohle 3 ist, siehe Figur 4, im Seitenriss vorne hochgebogen, hat eine abgerundete Spitze 4 und besteht im wesentlichen aus einem Boden 5, der etwa im letzten Drittel nach vorne keilformig zusammenläuft und auf welchem beidseitig ein Rand 6 angeordnet ist, der nicht ganz bis zum der Spitze entgegengesetzten Ende verläuft, siehe Figuren 4 und 5. Die Seiten 7 des Bodens und der Rander verjungen sich bezuglich der Bodenebene gegen die Mitte hin, um auch in dieser Ebene eine Keilwirkung zu erzielen.

Der Einsatz 2 besteht aus einem lichtleitenden Kunststoff, beispielsweise durchsichtige, thermoplastische Kunstharze wie Acrylharz, Polystyrol oder ähnliche, geeignete Kunststoffe. Die Unterseite des vorderen, zur Spitze auslaufenden Teils 8 ist der gekrümmten Innenform der Holzsohle angepasst, um dort aufgenommen zu werden. Der Einsatz weist im Querschnitt eine prismatische Form auf, während sich der vordere Teil, in Draufsicht gesehen, zur Spitze hin verjüngt. Die der Spitze 14 entgegengesetzte, quaderförmige und sich zur Spitze hin verjüngende Stirnseite 9 ist ausgebildet, das von einer an sich bekannten Apparatur ausgehende Licht aufzunehmen und weiterzuleiten.

Im Kunststoffeinsatz ist ein im wesentlichen prismatischer, längs verlaufender Lichtreflektor 10 eingebaut, der die Aufgabe hat, das herankommende Licht zu den beiden prismatischen Seitenflächen 11 des Kunststoffeinsatzes und somit auf die zu härtende Masse zu leiten. Dabei ist der Eingangsbereich 12 dieses Reflektors beim Stirnende 9 dazu ausgebildet, möglichst viel Licht zu sammeln und auf die prismatischen Reflektorflächen 10 zu leiten, wovon es dann nach aussen zu den Interdentalflächen geleitet wird.

Für den Zusammenbau des erfindungsgemässen InterdentalKeiles sind unter anderem folgende zwei Verfahren möglich: Zunächst wird die Holzsohle angefertigt und in eine Spritzgussform eingelegt, der Reflektor darauf befestigt und die Teile in eine Giessform gebracht, dann wird der Kunststoffeinsatz gespritzt oder gegossen. In einem anderen Verfahren werden die Holzsohle und der Einsatz mit dem Reflektor separat angefertigt und durch Ultraschall-Schweissen, Reibschweissen oder mittels einem geeigneten Kleber miteinander verbunden.

Statt aus Holz kann die Sohle auch aus anderen geeigneten Materialien bestehen. Bedingung hierfür ist jedoch, dass die Sohle weiterhin eine Kompressionscharakteristik möglichst ähnlich Holz aufweist: Holz ist insbesondere quer zu den Fasern zunächst leicht komprimierbar und verformbar. Bevorzugt ist daher auch das Holz für die Holzsohle so geschnitten, dass die Fasern längs des Keils ausgerichtet sind.

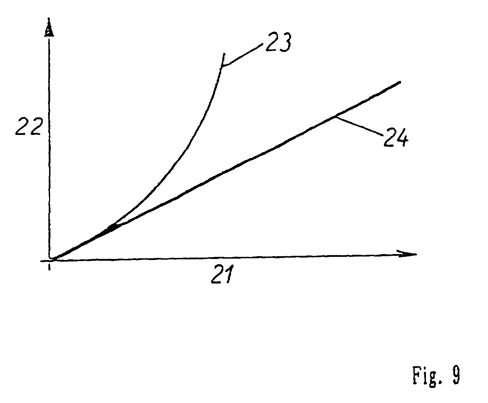

Die einer Deformation entgegengebrachte Kraft wächst jedoch sehr schnell an, wie es die Kurve der Figur 9 zeigt. Die Abszisse 21 stellt den Deformationsgrad dar, die Ordinate 22 die hierfür nötige Kraft. Kurve 23 zeigt das Verhalten von Holz, wobei die starke Zunahme der Kraft mit zunehmender Deformation (Kompression) ins Auge springt. Kurve 24 zum Vergleich das Verhalten eines (idealisierten) Elastomers: die Kraft nimmt proportional zur Verformung zu.

Die Deformation oder Kompression ist im Rahmen der Beschreibung als Volumenänderung relativ zum Volumen im ursprünglichen, nicht deformierten Zustand definiert. Der Anstieg der Kompressionskraft mit zunehmender Komprimierung muss also überproportional sein, d. h. eine Annäherung durch ein Polynom ergibt zumindest im praktisch relevanten Kompressionbereich Potenzen grösser 1. Grades, und bevorzugt Potenzen mindestens 2. Grades. Der praktisch relevante Bereich beginnt bei dem unkomprimierten Material und endet etwa dort, wo die Kompressionkraft mindestens gleich einer minimal geforderten Separationskraft der Zähne ist.

Die üblichen Elastomere und auch andere, gängige Kunststoffe sind nach den bisherigen Erfahrungen daher nicht geeignet. Es wurde jedoch gefunden, dass es möglich ist, insbesondere Thermoplasten, oder besser thermoplastischen Elastomeren, ein Deformationsverhalten aufzuprägen, das zumindest für Dentalkeile hinreichend dem jenigen von Holz gleicht. Hierzu werden in das Kunststoffmaterial komprimierbare Körper, Fasern mit hohem Luftgehalt oder einfacherweise Gasblasen eingearbeitet. Komprimierbare Körper können u. a. sein: Holzmehl, -fasern oder -splitter; Zellulosefasern; geschäumte Kunststoffpartikel; Garne, beispielsweise aus Baumwolle; Schläuche. Ein weiterer, möglicher Füllstoff sind Flüssigkristallpolymere (LCP).

Um ein gleichmässiges Verhalten der Sohle zu erhalten, sollten die Einlagerungen klein gegenüber den Abmessungen der Sohle sein. Bevorzugt weisen die eingelagerten Partikel eine gestreckte Form auf und sind weiter bevorzugt in der Längsrichtung des Interdental-Keils ausgerichtet. Auch im Fall von LCP ist eine Orientierung längs des Interdental-Keils vorteilhaft. Die Partikel und Gasblasen haben bevorzugt Grössen im Mikrometerbereich. Als mittlere Grösse (Zahlenmittel) kann bis zu 250 µm Länge und 30 µm Dicke, bevorzugt jedoch bis zu 100 µm Länge und 10 µm Dicke angesehen werden.

Es hat sich auch gezeigt, dass thermoplastische Elastomere regulären Thermoplasten überlegen sind. Grund dafür könnte sein, dass ein Material mit elastischen Eigenschaften einen von aussen einwirkenden Druck gleichmässig auf die (komprimierbaren) Einlagerungen verteilt und somit eine gleichmässigere Kompression erzielt wird. In der Praxis hat es sich gezeigt, dass bei Verwendung thermoplastischer Elastomeren die Sohle steifer wird, wodurch sich höhere Separationskräfte ergeben. Die Deformationsfähigkeit bleibt dennoch im erwünschten Masse erhalten.

Insbesondere geeignet hat sich als Matrixmaterial erwiesen:
- EVA: Ethylen-Vinylacetat-Copolymer; thermoplastisches Elastomer, z. B. die ELVAX™-Produktlinie (Du Pont de Nemours, Schweiz)

Die Herstellung von Keilen mit einer Sohle auf Kunststoffbasis kann analog wie bei der Holzsohle erfolgen, d. h. es wird zunächst die Sohle hergestellt, z. B. durch Spritzen, dann in einem zweiten Schritt der lichtleitende Kunststoffkörper und der Reflektor angebracht.

Eine interessante Variante in diesem Zusammenhang ist die Herstellung in einer einzigen Spritzgiessform, wobei zunächst die Sohle und daran anschliessend der Kunstoffeinsatz gespritzt wird. Insbesondere hierbei kommt zum Tragen, dass die für die Sohle verwendeten Kunststoffe per se eine bessere Adhäsion an dem Material des Kunststoffeinsatzes aufweisen.

## Patentansprüche

1. Interdental-Keil, insbesondere zur Verwendung beim Einsetzen approximaler Füllungen aus lichthärtendem Kunststoff, bestehend aus der Kombination einer kompressiblen Sohle (3) und einem darauf angeordneten Einsatz (2) aus Kunststoff, wobei die Sohle aus einem Material besteht, das ausgehend vom unkomprimierten Zustand unter einem Kraftaufwand komprimierbar ist, der bei weiterer Kompression überproportional zur Kompression ansteigt, um eine hohe Separationskraft zu erhalten.

2. Interdental-Keil nach Anspruch 1 zur Verwendung beim Einsetzen einer approximalen Füllung aus lichthärtendem Material, **dadurch gekennzeichnet, dass** der Kunststoff lichtleitend ist mit Mitteln (10), um das zur Härtung benötigte, durch die Stirnfläche (9) des Keiles einfallende Licht auf die Füllung zu werfen.

3. Interdental-Keil gemäss einem der Ansprüche 1 oder 2, **dadurch gekennzeichnet, dass** die Kompressionskraft in Abhängigkeit von der Kompression, ausgedrückt als Quotient aus Volumenänderung und Anfangsvolumen des Sohlenmaterials, zumindest im für den praktischen Einsatz relevanten Bereich durch ein Polynom annäherbar ist, das mindestens eine Potenz 2. oder höheren Grades enthält.

4. Interdental-Keil gemäss einem der Ansprüche 1 bis 3, **dadurch gekennzeichnet, dass** das Sohlenmaterial Holz oder ein Kunststoffmaterial ist, wobei
- das Kunststoffmaterial eine Matrix aufweist, in der Gasblasen und/oder komprimierbare Partikel eines Füllstoffes verteilt angeordnet sind,
- die Matrix aus einem oder mehreren Thermoplasten, einem oder mehreren thermoplastischen Elastomeren oder einer Mischung davon besteht,
- der Füllstoff eines oder eine Zusammensetzung mehrerer der folgenden Materialien ist: Holz; Zellulose; geschäumter Kunststoff; Garne oder andere Fasermaterialien natürlichen oder künstlichen Ursprungs mit Luft- oder Gaseinschlüssen; Schlauch; Flüssigkristall-Polymer (LCP), insbesondere mit längs des Interdental-Keils ausgerichteten Kristallen.

5. Interdental-Keil gemäss Anspruch 4, **dadurch gekennzeichnet, dass** die kompressiblen Bestandteile längs des Interdental-Keils ausgerichtet sind, insbesondere die Fasern von Holz und/oder anderem fasriges Material, die Vorzugsrichtung von Flüssigkristall-Polymer und/oder die länglichen Partikel anderer kompressibler Füllstoffe.

6. Interdental-Keil gemäss Anspruch 4, **dadurch gekennzeichnet, dass** der Kunststoff der Matrix der Sohle Ethylen-Vinylacetat (EVA).

7. Interdental-Keil gemäss einem der Ansprüche 4 bis 6, **dadurch gekennzeichnet, dass** die Partikel des Füllmaterials und die Gasblasen im Mittel eine Länge von bis zu 250 um und eine Dicke von bis zu 30 µm, bevorzugt eine Länge von bis zu 100 µm und eine Dicke von bis zu 10 µm aufweisen.

8. Interdental-Keil nach einem der Ansprüche 1 oder 7, **dadurch gekennzeichnet, dass** die Sohle (3) einen im Seitenriss an der Spitze (4) hochgebogenen Boden (5) mit zwei Rändern (6) aufweist, wobei sich die Seitenflächen des Bodens und der Ränder sowohl in bezug auf die Längsachse als auch in bezug auf die Ebene des Bodens zur Mitte hin verjüngen.

9. Interdental-Keil nach einem der Ansprüche 1 bis 8, **dadurch gekennzeichnet, dass** der Kunststoff-Einsatz (2) ein im Querschnitt gesehen prismatisches Vorderteil (8) und eine quaderförmige Stirnfläche (9) aufweist und einen im Querschnitt gesehen prismatischen Reflektor (10) mit einem bei der Stirnfläche angeordneten Eingangsteil (12) enthält, um das auf die Stirnfläche fallende Licht zu sammeln und auf die geneigten Seitenflächen (11) des Kunststoff-Einsatzes (2) zu leiten.

10. Verfahren zur Herstellung eines Interdental-Keiles nach einem der Ansprüche 1 bis 9, **dadurch gekennzeichnet, dass** zuerst die Sohle (3) hergestellt und in eine Spritzgiessform eingelegt wird, daraufhin ein Reflektor (10) angebracht wird, diese Teile in eine Giessform eingebracht werden und anschliessend der Kunststoff-Einsatz darauf gebildet wird.

11. Verfahren zur Herstellung eines Interdental-Keiles nach einem der Anspruch 1 bis 9, **dadurch gekennzeichnet, dass** die Sohle (3) und der Kunststoff-Einsatz (2) mit Reflektor (10) separat hergestellt und beide Teile anschliessend mittels Schweissen oder Kleben miteinander verbunden werden.

## Claims

1. Interdental wedge, especially for use in the insertion of approximal fillings of light curing synthetic materials, consisting of the combination of a compressible sole portion (3) and an insert (2) of a synthetic material arranged on top of the sole portion, the sole portion being made of a material which is compressible from an uncompressed state under the influence of a force which on further compression increases more than proportionally with respect to the compression in order to achieve a high separating force.

2. Interdental wedge according to claim 1 for use in the insertion of approximal fillings of a light curing material, **characterised in that** the synthetic material is light conducting and comprises means (10) for projecting the light necessary for curing and impinging on the end surface (9) of the wedge onto the filling.

3. Interdental wedge according to one of claims 1 or 2, **characterised in that** the compressive force, relative to the compression that is expressed as the quotient of the volume change and of the initial volume of the sole material, is capable of being approximated, at least within the range relevant for practical use, by a polynomial containing a power of the second or of a higher degree.

4. Interdental wedge according to any one of claims 1 to 3, **characterised in that** the material of the sole portion is wood or a synthetic material,
- the synthetic material comprising a matrix in which gas bubbles and/or compressible particles of a filler material are distributed,
- the matrix consisting of one or a plurality of thermoplastic resins, one or a plurality of thermoplastic elastomers, or of a mixture thereof, and
- the filler being one or a composition of a plurality of the following materials: wood; cellulose; a foamed synthetic material; threads or other fibrous materials of natural or synthetic origin containing air or gas inclusions; tubular materials; liquid crystal polymer (LCP), particularly with the crystals aligned in the lengthwise direction of the interdental wedge.

5. Interdental wedge according to claim 4, **characterised in that** the compressible components, especially the fibres of wood and/or other fibrous materials, the privileged direction of liquid crystal polymer, and/or the oblong particles of other compressible fillers are aligned in the lengthwise direction of the interdental wedge.

6. Interdental wedge according to claim 4, **characterised in that** the synthetic material of the sole portion matrix is ethylene-vinyl acetate (EVA).

7. Interdental wedge according to any one of claims 4 to 6, **characterised in that** the particles of the filler material and the gas bubbles have an average length of up to 250 µm and a thickness of up to 30 µm, preferably a length of up to 100 µm and a thickness of up to 10 µm.

8. Interdental wedge according to one of claims 1 or 7, **characterised in that** the sole portion (3) comprises, viewed in elevation, a bottom whose tip portion (4) is bent upwards and which has two borders (6), the side faces of the bottom and of the borders being tapered towards the centre both with respect to the longitudinal axis and with respect to the plane of the bottom.

9. Interdental wedge according to any one of claims 1 to 8, **characterised in that** the plastics insert (2) comprises a front portion (8) having a prismatic cross-sectional shape and a parallelepipedic front surface (9), as well as a reflector (10) having a prismatic cross-sectional shape and an entry portion (12) disposed at the front surface in order to collect the light impinging on the front surface and to conduct it onto the inclined lateral surfaces (11) of the plastics insert (2).

10. Process for the manufacture of an interdental wedge according to any one of claims 1 to 9, **characterised in that** the sole portion (3) is first manufactured and inserted into an injection mould, whereupon a reflector (10) is attached, these parts are introduced into a casting mould, and then the plastics insert is moulded on these parts.

11. Process for the manufacture of an interdental wedge according to any one of claims 1 to 9, **characterised in that** the sole portion (3) and the plastics insert (2) with the reflector (10) are manufactured separately, and both parts are then combined by welding or cementing.

## Revendications

1. Coin interdentaire, particulièrement pour l'utilisation lors de la mise en place d'obturations proximales durcissables à la lumière, composé d'une semelle (3) compressible et d'une insertion (2) en matière synthétique disposée sur ladite semelle, la semelle consistant d'une matière compressible à partir de l'état non comprimé par une force qui, pendant la compression ultérieure, augmente de manière surproportionnelle afin d'obtenir une haute force de séparation.

2. Coin interdentaire selon la revendication 1 pour l'utilisation lors de la mise en place d'une obturation proximale en matière durcissable à la lumière, **caractérisé en ce que** ladite matière est photoconductrice et comporte des moyens (10) permettant de projeter la lumière nécessaire au durcissement, incidente par la face frontale (9) du coin, sur l'obturation.

3. Coin interdentaire selon l'une des revendications 1 ou 2, **caractérisé en ce que** la relation entre la force de compression et la compression, c'est-à-dire le rapport de la variation du volume au volume initial de la matière de la semelle, peut être exprimée approximativement, au moins dans le domaine essentiel à l'application pratique, par un polynôme comprenant une puissance au moins du deuxième ordre ou d'ordre supérieur.

4. Coin interdentaire selon l'une des revendications 1 à 3, **caractérisé en ce que** la matière de la semelle est du bois ou une matière synthétique,
- la matière synthétique comprenant une matrice dans laquelle sont distribuées des bulles de gaz et/ou des particules compressibles d'une matière de charge,
- ladite matrice étant composée d'une ou de plusieurs matières thermoplastiques, d'une ou de plusieurs matières élastomères thermoplastiques ou d'un mélange desdites matières,
- la matière de charge étant l'une ou une composition d'une pluralité des matières suivantes: bois; cellulose; matières synthétiques moussées; fils ou autres matières fibreuses d'origine naturelle ou artificielle avec des inclusions d'air ou de gaz; matières tubulaires; cristal liquide polymère (LCP), plus particulièrement aligné en direction longitudinale du coin interdentaire.

5. Coin interdentaire selon la revendication 4, **caractérisé en ce que** les composants compressibles, plus particulièrement les fibres de bois et/ou d'autres matières fibreuses, la direction préférentielle du cristal liquide polymère et/ou les particules allongés d'autres matières de charge compressibles, sont alignés en direction longitudinale du coin interdentaire.

6. Coin interdentaire selon la revendication 4, **caractérisé en ce que** la matière synthétique de la matrice de la semelle est le copolymère éthylène/acétate de vinyle (EVA).

7. Coin interdentaire selon l'une quelconque des revendications 4 à 6, **caractérisé en ce que** les particules de la matière de charge et les bulles de gaz ont une longueur moyenne jusqu'à 250 µm et une épaisseur jusqu'à 30 µm, de préférence une longueur jusqu'à 100 µm et une épaisseur jusqu'à 10 µm.

8. Coin interdentaire selon l'une des revendications 1 ou 7, **caractérisé en ce que** la semelle (3) comporte un fond (6) dont la pointe (4) est relevée dans le plan vertical longitudinal du fond et qui présente deux bords (6), les faces latérales du fond et des bords s'effilant vers le centre et par rapport à l'axe longitudinal et par rapport au plan du fond.

9. Coin interdentaire selon l'une quelconque des revendications 1 à 8, **caractérisé en ce que** l'insertion (2) en matière synthétique (2) présente une partie avant (8) de coupe transversale prismatique et une face frontale (9) parallélépipédique et comporte un réflecteur (10) de coupe transversale prismatique, muni d'une partie d'entrée située à la face frontale afin de capter la lumière incidente sur la face frontale et de la diriger sur les faces latérales (11) inclinées de l'insertion (2) en matière synthétique.

10. Procédé de fabrication du coin interdentaire selon l'une quelconque des revendications 1 à 9, **caractérisé en ce que** d'abord ladite semelle (3) est fabriquée et placée dans un moule d'injection, un réflecteur (10) est ajouté, l'ensemble est introduit dans un moule et l'insertion en matière synthétique est ensuite formée sur ce dernier.

11. Procédé de fabrication du coin interdentaire selon l'une quelconque des revendications 1 à 9, **caractérisé en ce que** la semelle (3) et l'insertion en matière synthétique (2) y compris le réflecteur (10) sont fabriquées séparément, et ces deux éléments sont ensuite reliées par soudage ou collage.
